# EUROPEAN PATENT SPECIFICATION

(11) **EP 0 446 592 B1**
(45) Date of publication and mention of the grant of the patent: **18.05.1994**
(21) Application number: 91101255.7
(22) Date of filing: 31.01.1991
(51) Int. Cl.: B01J 8/02, B01J 8/04, C01C 1/04, C07C 29/15

(54) **A wall structure for the distribution of gas in catalytic beds and for the support with minimum dimensions of the catalyst in reactors for heterogeneous synthesis**
Wandstruktur für die Gasverteilung in katalytischen Betten und für einen Katalysatorträgerkörper mit minimalen Dimensionen in Synthesereaktoren der heterogenen Phase
Structure de paroi pour la distribution de gaz dans des lits catalytiques et pour un support à dimensions minimales de catalyseur dans des réactions de synthèse hétérogène

(30) Priority: 27.02.1990 CH 617/90
(43) Date of publication of application: 18.09.1991
(73) Proprietor: AMMONIA CASALE S.A., CH-6900 Lugano-Besso (CH); Zardi, Umberto, CH-6932 Breganzona (Ti) (CH)
(72) Inventor: Zardi, Umberto, CH-6932 Breganzona (CH); Pagani, Giorgio, CH-6900 Lugano (CH)
(74) Representative: Bottero, Claudio

(56) References cited:
- EP-A- 0 332 757
- EP-A- 0 364 664
- EP-A- 0 365 929
- US-A- 2 835 560

## Description

This invention concerns a wall structure for an optimal distribution of gas flow and support of the catalyst in catalytic beds of radial or axial-radial synthesis reactors.

The importance of achieving the even distribution of gas throughout the catalyst in the above-mentioned reactors for heterogeneous synthesis with fixed beds, as for example the synthesis of ammonia, methanol or other products is well known.

Moreover, the walls for the distribution of gas and for containing the catalyst in the catalytic beds must ensure, besides the correct distribution of the gas (even distribution along the entire height of the bed, minimum impact of the gas with the catalyst to avoid channelling and damaging the catalyst), the necessary mechanical support of the catalytic beds.

The thermal and mechanical stress undergone by the walls, owing to settling by the catalyst and heat dilation resulting from the high temperatures used, is, in effect, considerable.

Consequently, the function as mechanical support, besides the even distribution of the gas, is important if the system is to function correctly.

The optimal mechanical sizing of the various elements which go to form the wall supporting the catalytic beds, which at the same time must ensure the optimal distribution of the gas, represents therefore a critical aspect of the problem.

Another critical aspect is the possibility of producing said walls with minimum dimensions or radial thickness in order to ensure the maximum available volume for the catalytic beds (maximum volume of the catalytic beds) with the minimum volume of the expensive containers, operating at high pressure.

For this purpose, said walls usually consist of several elements which have different functions.

As already described by the Applicants in European Patent Application EP-A-0 265 654 and in a recent patent application not yet open to public inspection, the walls containing the catalyst may consist of three elements:
a) a thin element permeable to gas (for example perforated wall) whose sole function is to effect the pressure drop necessary to ensure the even distribution of gas along the entire height of the bed;
b) an element to contain the catalyst (net, for example), making no contribution to the mechanical support of the catalytic bed and having a low pressure drop;
c) a thick intermediate element situated between element a) and element b), whose function is to support mechanically the catalytic bed and to create an airspace for the better distribution of gas, said element consisting for example of a wall with "bridge" perforations.

The above airspace must perform the following tasks:
- avoid the direct impact with the catalyst of the high-speed gas coming from element a) which effects the pressure drop;
- equalize the gas flow feeding the catalytic bed through the entire height of the bed itself.

The solution put forward by the Applicants with the aforementioned system consisting of three elements a), b) and c) has proved extremely efficient providing at the same time and in an optimal way the solution to the problems of gas distribution, of a reliable mechanical support for the catalyst in the catalytic beds, and of maximum use of the available volume of the containers for the catalyst-carrying cartridges, thus overcoming the limitations and drawbacks found in the state of the art, for example in British Patents GB 1.118.750 and GB 1.352.550.

In certain cases, however, the above system can prove, besides being expensive, to be rather complex and laborious from the constructional point of view.

Continuing their research, the Applicants, not without surprise, have managed to achieve the object of providing a wall structure offering and improving the operating advantages of the three-element wall, but free of the drawbacks accompanying it.

This and other objects which will better appear from the description which follows, are achieved by a wall structure according to the preamble of claim 1, characterized by the fact that it consists of:
a) a single element with gas-permeable portions capable of ensuring the necessary pressure drop in the gas flow and gas-impermeable portions acting as mechanical support for the catalyst;
b) a catalyst-containing, gas-permeable, element in direct contact with the catalyst and with said gas-impermeable portions acting as mechanical support.

According to a particularly simple and advantageous embodiment, the single element a) is formed by contiguous embossed portions impermeable to gas acting as mechanical support and perforated portions permeable to gas capable of ensuring the necessary pressure drop, said perforations being situated between the above-mentioned contiguous embossings and element b) containing the catalyst being directly supported by the embossed portions of a).

The desired result is thus achieved by resting element b) containing the catalyst on the embossed parts of element a), forming an airspace corresponding to the unembossed portions of the same, which are the portions through which flows the gas which has undergone the desired pressure drop by running through the perforations of said portions.

Said airspace avoids direct impact on the catalyst of the high-speed gas coming from the perforations and equalizes the gas flow feeding the catalytic bed along the entire height of the catalytic bed.

Fundamental characteristics already described by the Applicants in the system with a three- element wall.

Besides, by so acting, several advantages are obtained, among which we shall just mention that, since the wall structure consists of just two elements, a greater use is made of the available volume of the containers for the catalyst-holding cartridges (smaller dimension of walls) and the structure of the synthesis reactor is made considerably lighter.

The various aspects and advantages of the invention will be better understood from the detailed description of an example of a preferred embodiment given below with reference to the non-limitative drawings attached, in which:
- figure 1 is the partial and schematic front cross-section of a portion of the two-element wall, according to the invention;
- figure 2 is a partial and schematic longitudinal cross-section with axial planes of a portion of the two-element wall, according to the invention;
- figure 3 is a partial and schematic cross-section of a portion of the two-element wall according to the invention.

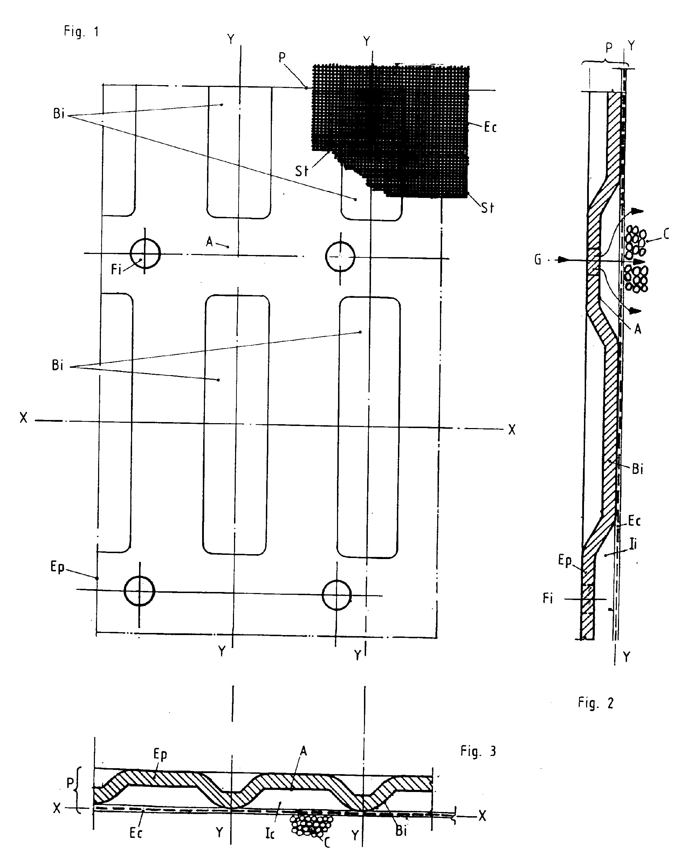

More particularly, figure 1 shows a wall structure P consisting of at least an element permeable to gas Ep which creates the pressure drop and of an element supporting the catalyst Ec.

The element permeable to gas Ep has in turn embossed areas Bi impermeable to gas and an unembossed area A permeable to gas through perforations Fi.

The element Ec rests on element Ep where the embossed areas Bi are found along longitudinal axes y-y as shown in figure 2.

In this way corresponding to unembossed area A between Ep and Ec, airspaces Ii are created permitting gas G which has run through perforations Fi of said element Ep to expand before penetrating into catalyst C.

Figure 3 shows a cross-section of the wall structure according to the invention, in which references used in figures 1 and 2 are used, which obviously maintain the same significance.

Clearly, in figure 1 line St represents a cross-section of the surface of wall structure P so as to show only partially, also in frontal view, the element Ec supporting the catalyst.

## Claims

1. A wall structure of minimum thickness for an optimal distribution of gas flow and support of the catalyst in catalytic beds of radial or axial-radial synthesis reactors, characterized in that it consists of:
a) a single element (Ep) with gas-permeable portions (A) capable of ensuring the necessary pressure drop in the gas flow and gas-impermeable portions (Bi) acting as mechanical support for the catalyst (C);
b) a catalyst-containing, gas-permeable, element (Ec) in direct contact with the catalyst (C) and with said gas-impermeable portions (Bi) acting as mechanical support.

2. A wall structure according to claim 1, characterized in that said single element (Ep) comprises a plurality of contiguous embossed gas-impermeable (Bi) and gas-permeable (A) portions including a plurality of perforations (Fi) between said contiguous embossed portions (Bi), said catalyst-containing, gas-permeable, element (Ec) being directly supported by the embossed portions (Bi).

3. A wall structure according to claim 2, characterized in that said catalyst-containing, gas-permeable, element (Ec) forms an airspace (Ii) facing the gas-permeable (A) portions capable of ensuring the necessary pressure drop in the gas flow.

## Patentansprüche

1. Wandstruktur mit minimaler Dicke für eine optimale Verteilung des Gasflusses und zum Tragen des Katalysators in Katalysatorbetten von radialen oder axial-radialen Synthesereaktoren,
dadurch gekennzeichnet, daß sie aus
a) einem einzelnen Element (Ep) mit gasdurchlässigen Teilen (A), welche in der Lage sind, den notwendigen Druckabfall im Gasfluß zu gewährleisten, und gasundurchlässigen Teilen (Bi), welche als mechanische Unterstützung für den Katalysator wirken,
b) einem katalysatorhaltigen, gasdurchlässigen Element (Ec) in direktem Kontakt mit dem Katalysator (C) und mit den gasundurchlässigen Teilen (Bi), welche als mechanische Unterstützung wirken,
besteht.

2. Wandstruktur nach Anspruch 1, dadurch gekennzeichnet, daß das einzelne Element (Ep) eine Vielzahl von aneinander angrenzenden ausgebeulten gasundurchlässigen (Bi) und gasdurchlässigen (A) Teilen einschließlich einer Vielzahl von Perforationen (Fi) zwischen den aneinander angrenzenden ausgebeulten Teilen (Bi) umfaßt, wobei das katalysatorhaltige, gasdurchlässige Element (Ec) direkt durch die ausgebeulten Teile (Bi) unterstützt wird.

3. Wandstruktur nach Anspruch 2, dadurch gekennzeichnet, daß das katalysatorhaltige gasdurchlässige Element (Ec) einen Luftbereich (Ii) bildet, der den gasdurchlässigen (A) Teilen gegenüberliegt, die in der Lage sind, den notwendigen Druckabfall in dem Gasfluß zu gewährleisten.

## Revendications

1. Structure de paroi d'épaisseur minimale pour une répartition optimale d'un écoulement gazeux et le soutien du catalyseur dans des lits catalytiques de réacteurs de synthèse radiaux ou axiaux/radiaux, caractérisée en ce qu'elle consiste en :
a) un seul élément (Ep) avec des parties perméables au gaz (A) propres à assurer la chute de pression nécessaire dans l'écoulement gazeux et des parties imperméables au gaz (Bi) faisant fonction de support mécanique pour le catalyseur (C) ;
b) un élément (Ec) perméable au gaz et contenant le catalyseur en contact direct avec le catalyseur (C), et avec lesdites parties imperméables au gaz (Bi) faisant fonction de support mécanique.

2. Structure de paroi selon la revendication 1, caractérisée en ce que ledit élément (Ep) comprend une pluralité de parties contiguës imperméables au gaz (Bi) en relief et perméables au gaz (A), présentant une pluralité de perforations (Fi) entre lesdites parties contiguës en relief (Bi), ledit élément (Ec) perméable au gaz et contenant le catalyseur étant directement soutenu par les parties en relief (Bi).

3. Structure de paroi selon la revendication 2, caractérisée en ce que ledit élément (Ec) perméable au gaz et contenant le catalyseur forme un espace d'air (Ii) en face des parties perméables au gaz (A) propres à assurer la chute de pression nécessaire dans l'écoulement gazeux.
